Europäisches Patentamt

European Patent Office

Office européen des brevets

(11) Publication number: **0 259 659**
**A2**

# EUROPEAN PATENT APPLICATION

(21) Application number: 87111967.3

(51) Int. Cl.⁴: **G06F 13/38**

(22) Date of filing: **18.08.87**

(30) Priority: **29.08.86 US 901913**

(43) Date of publication of application:
**16.03.88 Bulletin 88/11**

(84) Designated Contracting States:
**DE FR GB**

(71) Applicant: **International Business Machines
Corporation
Old Orchard Road
Armonk, N.Y. 10504(US)**

(72) Inventor: **Meckstroth, John Robert
11505 Big Trail Cove
Austin Texas 78759(US)**
Inventor: **Wilson, John Hayden
404 Inwood Road
Austin Texas 78746(US)**

(74) Representative: **Appleton, John Edward
IBM United Kingdom Limited Intellectual
Property Department Hursley Park
Winchester Hampshire SO21 2JN(GB)**

(54) A data processing machine including an adapter card driver mechanism.

(57) A driver mechanism implemented in software and loaded in a computer supports multiple adapter cards in the computer under a single application programming interface. The driver mechanism enables multiple software subsystems in the computer which operate under a common application programming interface to be implemented on a plurality of different adapter cards resident within the computer. The driver mechanism is supported by data structures including an I/O address file containing information as to the addresses of each card installed in the computer, the card type and name of a corresponding directory file in the application programming interface. Directory files for the application programming interface comprise one file for each different card type installed in the computer. Two key functions performed by the driver mechanism are the INITIALIZE function and the OPEN function. The INITIALIZE function initializes the required adapter card hardware and tests its acceptability, and it also initializes a software control block structure for such adapter card to provide for the loading and concurrent execution of some number of processing functions. The OPEN function enables an application program to gain access to a required hardware resource on one or more of said adapter cards. Each of the hardware resources of an adapter card may be concurrently accessed by some predetermined number of applications.

## A DATA PROCESSING MACHINE INCLUDING AN ADAPTER CARD DRIVER MECHANISM

This invention relates to a programming interface in an information processing system, and more particularly, to a driver mechanism for handling a plurality of functions on the programming interface.

In today's microprocessing environment, including personal computers, typically a plurality of adapter cards are connected in a personal computer to provide functions such as asynchronous communications and audio/telephony communications. The personal computer normally has a control program stored in RAM (Random Access Memory) which enables an application program to communicate with a given adapter card. For example, if a personal computer has an audio adapter card connected therein, then it would have also loaded an audio software subsystem which would enable application programs to interface with the adapter card. Associated with each software subsystem in the host is a driver mechanism which enables the application software to interface with the software subsystem.

In such a personal computer, there is an application programming interface over which application programs interface with the operating system software. Specifically, the application interfaces across the application programming interface (API) with the software driver mechanism which in turn interfaces with the software subsystem for a particular adapter card. The software subsystem interacts with the adapter card across what is known as the hardware interface. In order for a given adapter card to function in the host, it must be supported by the API. Each subsystem loaded in the host provides several functions supported by the API which are divided into a plurality of function sets. First, there is a base function set to manage the hardware resources of the associated adapter card. Additionally, there are a number of other function sets which are individually optional for each particular adapter card. However, some subsets of the optional function sets may be implemented on an adapter card in a family of adapter cards supported by a particular software subsystem.

A problem that exists today is that a plurality of driver mechanisms are required when more than one adapter card is installed in the host. That is, a separate driver is required to interface with each software subsystem that communicates with a resident adapter card. There exists no driver mechanism that enables multiple subsystems with a common application programming interface to be implemented on a plurality of different adapter cards within a given family of adapter cards.

U. S. Patent 4,263,650 describes a digital data processing system having a plurality of peripheral interface adapters coupled to a common bi-directional data bus. The data bus is controlled by a microprocessor unit which is coupled thereto and which interfaces with both read-only and random access memories. The interface adapters enable peripheral units to communicate with the data bus and hence with the microprocessor unit and the various storage elements. Each interface adapter includes a control register loadable under program control with the contents of the control register controlling selection of several registers within the interface adapter. Other functions of the peripheral interface adapter such as determining direction of data movement at the peripheral buffers of the interface adapter are controlled by the control register. The microprocessor unit monitors the contents of the control register of each interface adapter.

U. S. Patent 4,174,536 discloses a digital communications controller in a microprocessor based system enabling message routing for communication between a number of different devices. A plurality of serial interfaces connected to an address bus and a data bus enable communication between a microprocessor and a plurality of ports.

U. S. Patents 4,250,563 and 4,254,473 both disclose a programmable controller in which a plurality of I/O interface racks are connected through two-way communication channels to a central processor means. The I/O interface racks are interconnected by two-way serial communication cables that connect to serial I/O data ports on the rack adapters. A central processor controls a distributed network of I/O interface racks through the interface adapters. Different numbers and sizes of I/O interface racks can be combined together to form communication channels.

According to the present invention there is provided a data processing machine including a processing unit, a random access memory for storing a control program and at least one application program, a data bus for connecting the processing unit and the random access memory with a plurality of adapter cards, each card including means to provide different control functions for the machine, said control program also including an application program interface for controlling the transfer of data between registers controlled by an application program and registers controlled by the adapter card characterised in that the application program interface includes a driver mechanism having means to concurrently enable more than one adapter card so that an application program can control the exchange of data between the random access memory and a plurality of adapter cards.

In a preferred embodiment of the invention, a driver mechanism implemented in software and loaded in a host computer supports multiple adapter cards in the host computer under a single application programming interface. The driver mechanism enables multiple software subsystems in a host system which operate under a common application programming interface to be implemented on a plurality of different adapter cards within a family of adapter cards which are resident within the host.

Each adapter card that is supported by the application programming interface has an I/O address and I/O functions that provide for the determination of the type of card resident in the host computer, the hardware interrupt level, and any existing card address in the host random access memory (RAM). The host also contains, in RAM, several files. An I/O address file contains the I/O addresses of each card installed in the host that is supported by the application programming interface. This file also indicates the card type and the name of the corresponding directory file in the application programming interface. The application programming interface directory files comprise one file for each different card type installed in the host. There is a record in this file for each function set that is supported by the adapter card. The record contains the name of the file comprising the programming support for a given function set. Each function set file is an object code program which implements the functions defined by the application programming interface for that particular function set. These function set files also generate the interrupts defined for that particular function set.

At the time of initial program load of the host system, the driver mechanism performs three functions. First, it loads the I/O address file into RAM and checks each I/O address for existence and type of adapter. Secondly, it loads the base function set for each type of adapter card that indicates it should be loaded at IPL time. Thirdly, it calls each loaded base function set at its initial entry point.

Two key functions performed by the driver mechanism are the INITIALIZE function and the OPEN function. The first entry in an entry point vector for the base function set of an adapter card is an INITIALIZE entry point. This entry point is not available to applications, but may only be called by the driver mechanism. The address of the application programming interface directory for the particular hardware implementation is passed on as an argument to the INITIALIZE function and the function returns a code indicating success or failure. The INITIALIZE function performs the following two tasks: First, it initializes the required hardware, i.e., the adapter card hardware and tests its acceptability; and, secondly, it initializes the software control block structure for the adapter card to provide for the loading and concurrent execution of some number of function sets which can be loaded on demand.

The OPEN function enables an application to gain access to a required hardware resource by providing an identifier to the OPEN function. The hardware resources of an adapter card may be concurrently accessed by some predetermined number of applications.

In order that the invention may be fully understood a preferred embodiment will now be described with reference to the accompanying drawings in which:-

Fig. 1 is a functional block diagram of the information processing system according to the present invention.

Fig. 2 is a block diagram of the file structure in the host computer of the information processing system described in the present invention.

Fig. 3 is a block diagram of the control structures used in the host system to provide driver concurrency among a plurality of adapter cards.

Fig. 4 is a flow chart depicting the operation of the driver mechanism at the time the host system is initially program loaded.

Fig. 5 is a flow chart of the driver mechanism depicting the operation at the time an OPEN function is performed.

Fig. 6 is a flow chart depicting the operation of the driver mechanism at the time a particular function is invoked by the host system.

Fig. 7 is a simplified functional block diagram of an adapter card. Fig. 8 is a functional block diagram of the flow of commands and interrupts.

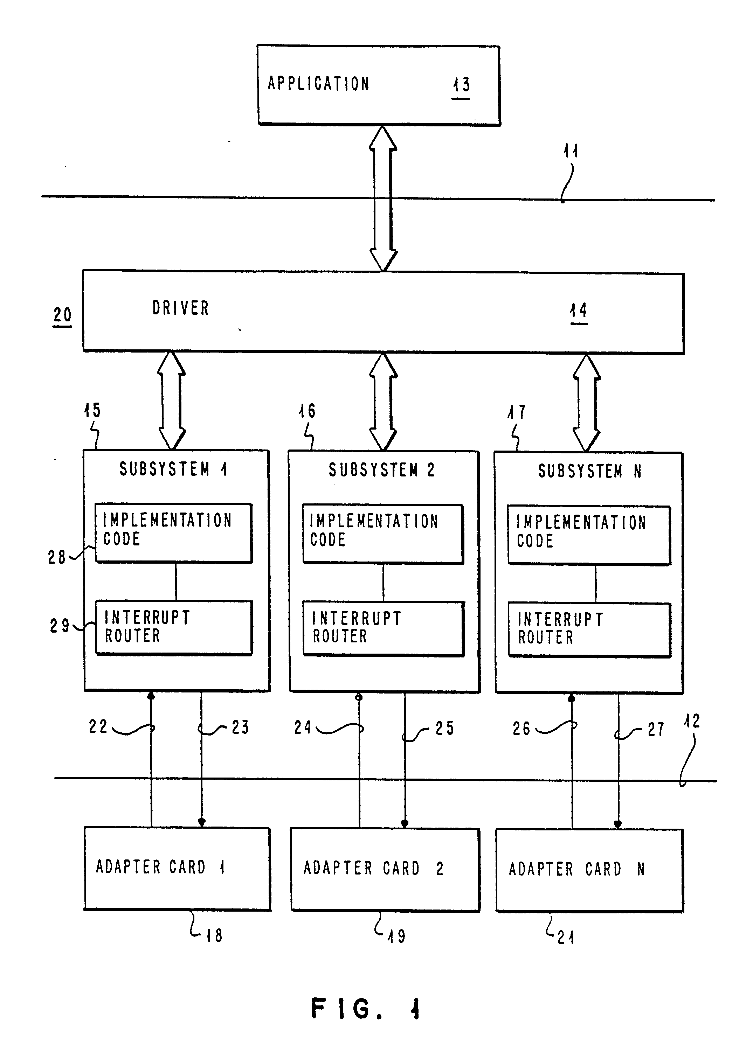

A simplified functional block diagram of the overall information processing system used in the present invention is shown in Fig. 1. Application 13 interacts across application programming interface 11 with the various software modules in host 20. These software modules include driver 14, subsystem 15, subsystem 16, and subsystem 17. Each of subsystems 15-17 comprise an implementation code and an interrupt router, both in software. Hardware interface 12 forms the boundary between host processing system 20 and adapter cards 18, 19 and 21. This interface 12 may be different for different types of adapters and while three adapter cards are indicated in Fig. 1, the number of adapter cards which may interact with host 20 across interface 12 is limited only by the number of adapter slots in host 20. For subsystem 15 and adapter card 18, application commands flow across line 23 to adapter card 18, while interrupts originate in a section of instruction memory (not shown) in adapter card 18 and flow across line 22 to subsystem 15. Similarly, commands and interrupts travel between subsystem 16 and adapter card 19 over lines 24 and 25, and commands and interrupts travel between subsystem 17 and adapter card 21 over lines 26 and 27.

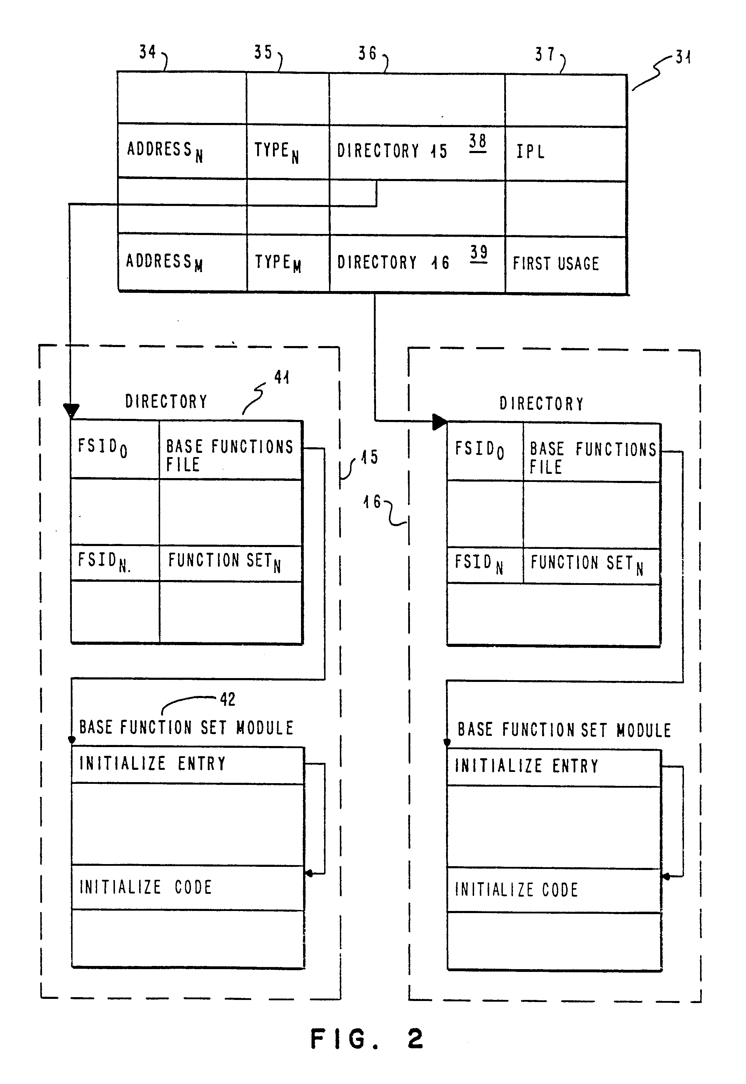

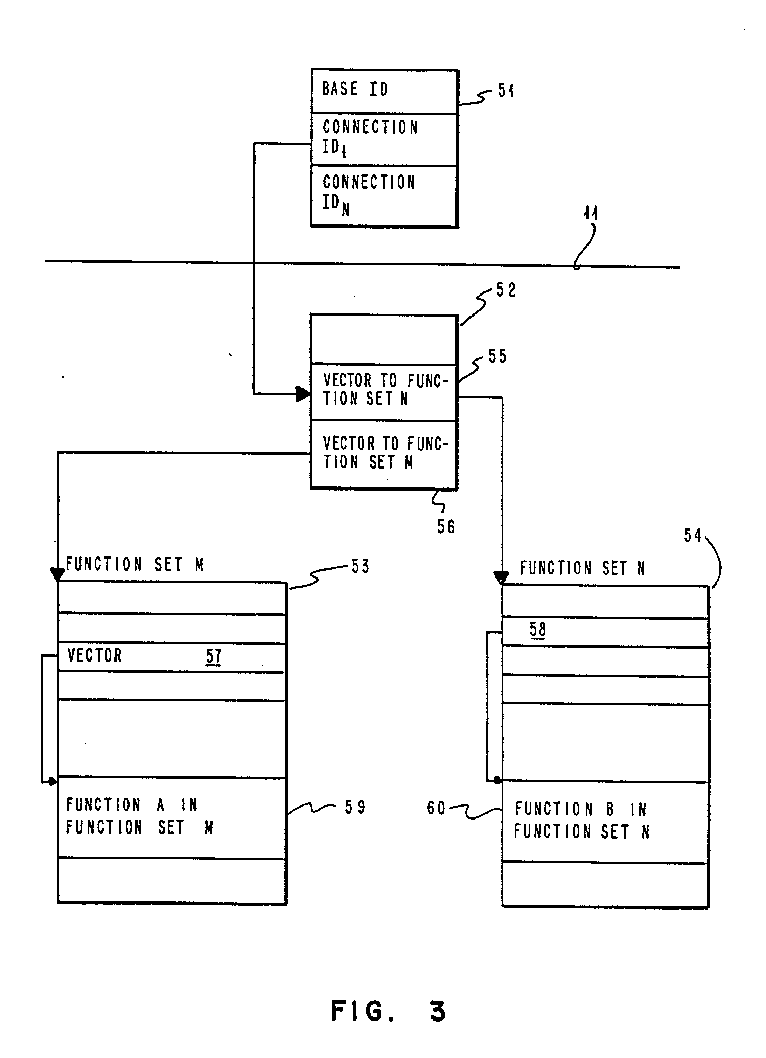

Application programming interface (API) 11 provides a certain class of functions that can be implemented on a particular set of adapter cards, such as adapter cards 18, 19, and 21. For example, a voice communication programming interface implemented as API 11 would support different types of voice adapter cards, while an asynchronous communications programming interface implemented as API 11 would support different types of communication adapter cards. Typically, the functions supported by a given adapter card on API 11 are divided into a plurality of function sets as depicted in Figs. 2 and 3. A base function set manages the logical resources provided by a particular adapter card. A number of other function sets are also provided by a given adapter card such that some subset of these function sets can be implemented on the adapter card, such as adapter card 18, in the family of adapter cards supported by a given subsystem such as subsystem 15. API 11 is divided into such function sets in order to allow for subset hardware implementation on a given adapter card and to allow only those functions needed to be stored in memory at any given time. In this manner, memory space is not wasted for functions which will not be used at any given time.

The file structure existing in host 20 is shown in Fig. 2. This file structure which is typically found on a disk in host 20 comprises I/O address file 31 as well as a plurality of directories and base function set modules such as directory 41 and base function set module 42. Together directory 41 and base function set module 42 are included in subsystem 15. Similarly, subsystem 16 contains a directory and a base function set module. The I/O address file 31 comprises four separate columns of information. Column 34 provides the identification of the adapter card required by a particular application program. Column 35 indicates the type of adapter required by the application program, i.e., a voice adapter card or an asynchronous communications card. Column 36 points to the directory for the required adapter, that is, the software support required for the adapter. For example, block 38 points to directory 41 of subsystem 15. Likewise, block 39 points to the directory shown for subsystem 16. Finally, column 37 indicates whether a given subsystem should be initialized at either initial program load or at first usage of the subsystem by a given application. A directory such as directory 41 contains one entry for every function set in that particular subsystem. All of the function sets in a given directory such as directory 41 must support the base function set for subsystem 15. The base function set module 42 describes what the base function set for a given family of adapter cards includes.

Each adapter card is known to API 11 by a unique identifier, known as the I/O address as previously described in Fig. 2 with respect to I/O address file 31. An application gains access to a particular adapter card within I/O address file 31 by providing this identifier to the OPEN function of the base function set 42. Each adapter card may allow some predetermined number of applications to concurrently access the hardware on the adapter card. The OPEN hardware implementation stores into the OPEN parameter structure block 51 in Fig. 3 the indirect address of a vector of entry points to the base functions for an adapter. The address is known as the base ID. Additionally, the OPEN implementation stores into block 51 the indirect addresses of a number of other vectors which correspond with the number of other function sets that can be concurrently supported by the adapter. These addresses are called connection IDs as shown in block 51.

The control structures for an adapter card depicting the relationship between a driver and a subsystem such as driver 14 and subsystem 15 is shown in Fig. 3. This control structure is located in host 20. The base ID and connection IDs in Block 51 are used by the application to direct which function sets are to be loaded and used for the particular subsystem opened. Block 52 includes a plurality of vectors such as vectors 55 and 56 which point to the active function sets as required by an application. For example, vector 55 points to function set N, 54 while vector 56 points to function set M, 53. Further, function set 53 contains a plurality of vectors such as vector 57 which points to the functions provided by function set 53. As shown in Fig. 3, vector 57 points to function A in function set M located in block 59.

Each software implementation in a function set must conform to several constraints in interfacing with driver 14, i.e., subsystems 15, 16, and 17 must conform to these constraints. The first constraint that must be followed by any of subsystems 15-17 when interfacing with driver 14 is defined by a function "set load module". A load module is a self contained set of code resident in host 20 which is loaded by the base function set, such as base function set 42, on request from application 13. Each function set such as function set N in subsystem 15 is implemented as a separate load module. Each load module contains the code to support the functions in the function set such as function A in function set M shown in block 59. The load module also contains the code to drive the hardware on any of adapters 18, 19 and 21 according to the function definitions set up in each of the function sets. At the beginning of each load module, such as the base function set module 42 or the function set module 53, is a vector, such as vector 57, of entry point addresses corresponding to the functions in the function sets. These vectors are ordered according to the definition of the API function codes. Driver 14 can call any given entry in the vector for all hardware adapter cards.

The first entry in the entry point vector for base function set module 42 is an INITIALIZE entry (see Fig. 2). Such entry point is not available to application 13, but may only be called by driver 14. The address of the directory for API 11 for the hardware implementation requested for an adapter card is transferred as an argument to the function, and the function returns a code to API 11 indicating success or failure. The INITIALIZE function performs the following two tasks: First, it initializes the hardware on the adapter card and tests its acceptability; and, second, it initializes the software control block structure to provide for the loading and concurrent execution of some number of function sets required by application 13 for execution. These function sets may be loaded at this time.

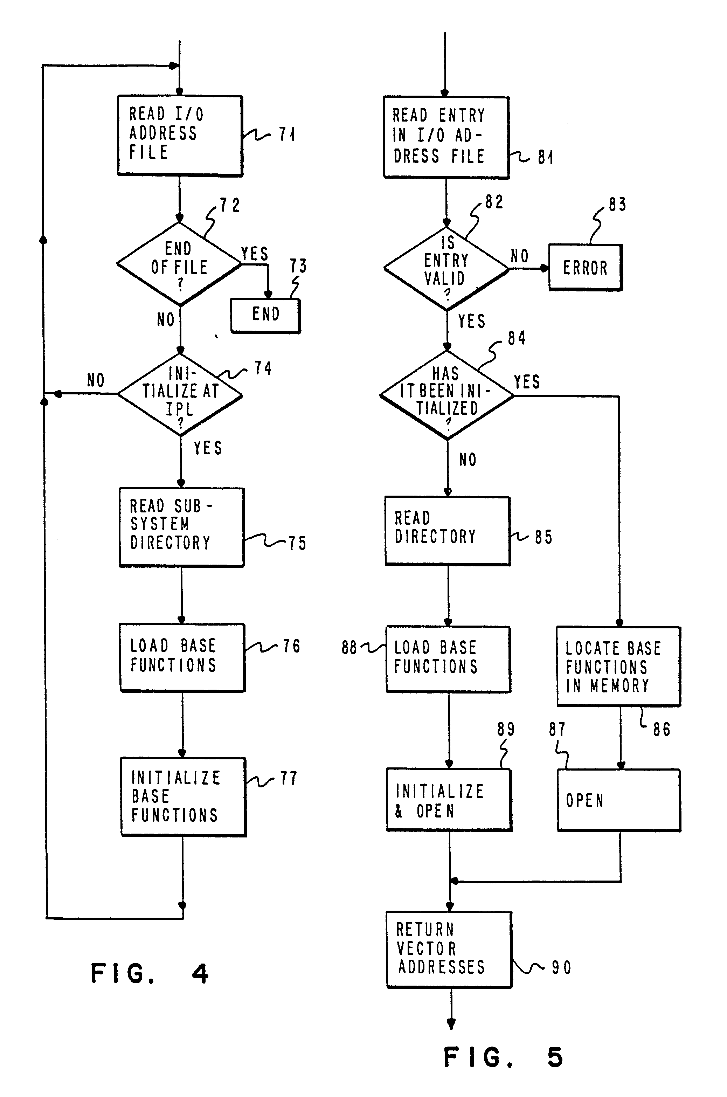

The operation of driver 14 will now be explained in more detail with respect to Figs. 4-6. Fig. 4 describes the operation of driver 14 at the time host 20 is powered on and an initial program load operation is performed. As shown in step 71, the first operation is to read all the entries in I/O address file 31. After a determination is made in step 72 that all such entries have been read, then as shown in block 73, the initial program load operation ends. As each entry in I/O address file 31 is being read, a determination is made in block 74 as to whether or not such entry is to be initialized at this initial program load time. If the answer is no, then the entries are merely read in file 31. However, if an entry is to be initialized at this time, then as shown in step 75 the subsystem directory is then read for that entry. Subsequently, the base functions are loaded into RAM and initialized as depicted in steps 76 and 77. Once again, these base functions are located in the particular subsystem which has been identified by I/O address file 31 according to the adapter card which is to be used.

Fig. 5 demonstrates the operation of driver 14 at the time of an OPEN function. First as shown in step 81, an entry is read in I/O address file 31. Next, a determination is made in step 82 as to whether or not this entry in I/O address file 31 is a valid one. If the entry is not a valid one, then this is an indication that an error has occurred and no further processing of this entry is done. However, if the entry is a valid one, then next in block 84 a determination is then made as to whether or not the entry has been initialized. If the entry has already been initialized, then operation proceeds to step 86 where the base functions are located in the memory of host 20 and an OPEN function is performed on them. However, if the entry which has been read has not yet been initialized, then as shown in step 85 directory 41 is read. Following the reading of directory 41, the base functions are loaded, initialized and opened, as shown in steps 88 and 89. After an entry has been opened, then as shown in step 90 vector addresses are returned to the individual function sets such as function sets 53 and 54 previously described with respect to Fig. 3.

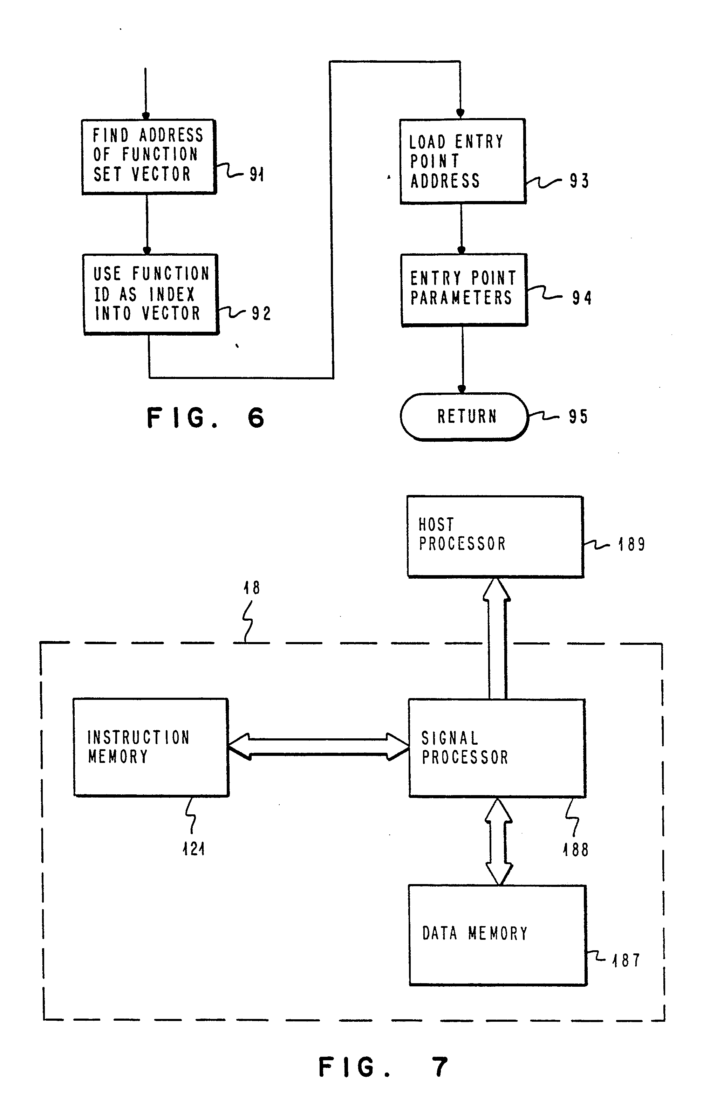

The flow chart of Fig. 6 indicates the operation of driver 14 at the time a function in a given function set is invoked. For example, this would occur in a voice communications adapter card that had a record and playback function at the time that it was desired to record and/or playback voice data. The first step as indicated in block 91 is to find the address of the function set vector. This is demonstrated in Fig. 3 as for example block 55 which contains the vector to the function set N, 54. Recall that the vector shown in block 55 is found using the connection ID as depicted in block 51. Next, block 92 indicates that the next step is to use the function ID as the index into the vector such as vector 58 in function set 54 also shown in Fig. 3. Following this step, is the step shown in 93 wherein the entry point address is loaded. Here the actual code that is to be used to invoke such function as is required is pointed to. Finally, as shown in steps 94 and 95 driver 14 calls the entry point address and passes these entry point parameters on to the function which requires the parameters for operation. Thus as shown in Fig. 3, the entry point parameters are passed on to function B in block 60 if it is function B which is invoked by driver 14. After this is done, then in step 95 a return is made to await the next function invocation.

A simplified functional block diagram of an adapter card such an adapter card 18 is shown in Fig. 7. This adapter card is assumed to be one having a signal processor 188 as a co-processor to be used with the host processor 189 of host 20. Signal processor 188 may be any commercially available signal processor such as the Texas Instruments TMS 32010. Signal processor 188 is totally controlled by host processor 189 and must have its central processing unit (CPU) instructions loaded before operation. Signal processor 188 uses instruction memory 121 as well as data memory 187. Both of these memories are accessible by host processor 189 although not at the same time as signal processor 188. Instruction memory 121 is accessible by host processor 189 only when signal processor 188 is turned off, i.e., reset. At that time, host processor 189 can load from instruction memory 21 and then switch to data memory 187 which is shared at all times dynamically with signal processor 188. Both signal processor 188 and host processor 189 have the capability to interrupt one another with interrupt masking under control of host processor 189.

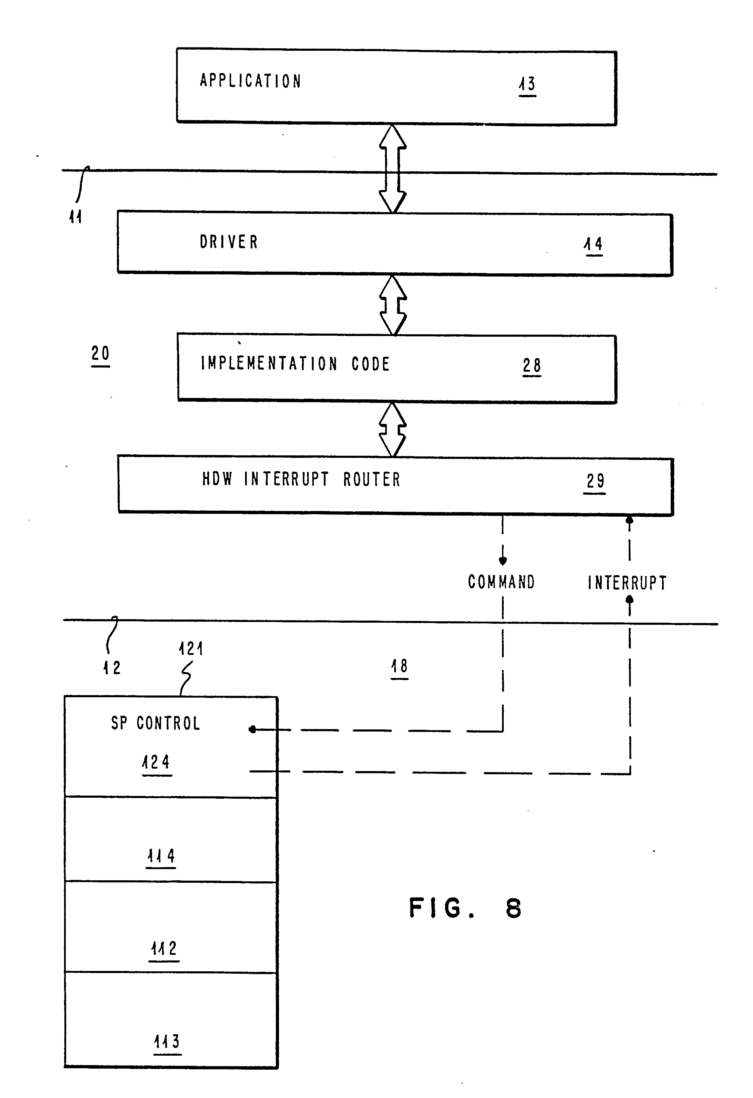

Fig. 8 shows in simplified functional block form the flow of commands and interrupts to and from application 13 through host 20 to adapter card 18 across interface 12. Application 13 interacts across application programming interface 11 with driver 14, implementation code 28, and hardware interrupt router 29, each of which is located in host 20. Hardware interface 12 forms the boundary between host 20 and adapter card 18. Application commands terminate in partition 124 of instruction memory 121, while interrupts originate in partition 124. Partition 124 contains the signal processor control program. This control program manages instruction memory 121 in partitions 112, 113, and 114, and allows the signal processing code in partitions 112, 113, and 114 to run concurrently, thereby sharing the resources of adapter card 18.

**Claims**

1. A data processing machine including a processing unit, a random access memory for storing a control program and at least one application program, a data bus for connecting the processing unit and the random access memory with a plurality of adapter cards, each card including means to provide different control functions for the machine, said control program also including an application program interface for controlling the transfer of data between registers controlled by an application program and registers controlled by the adapter card characterised in that the application program interface includes a driver mechanism having means to concurrently enable more than one adapter card so that an application program can control the exchange of data between the random access memory and a plurality of adapter cards.

2. A data processing machine as claimed in claim 1 in which the driver mechanism includes an I/O address file comprising, adapter card identification program, a directory pointer for a required adapter card and initialisation information for each of said adapter cards.

3. A data processing machine as claimed in claim 1 or claim 2 in which each adapter card includes a control program subsystem.

4. An information processing system, comprising:

a plurality of hardware resources and software subsystems for providing a plurality of processing functions;

at least one application program for concurrently interacting with said plurality of hardware resources and software subsystems; and,

means for interfacing said at least one application program with at least two of said plurality of hardware resources and software subsystems, thereby concurrently providing a plurality of processing functions.

5. An information processing system according to Claim 1 further comprising a plurality of adapter cards having at least one subset of said plurality of hardware resources, each of said plurality of adapter cards being supported by one of said plurality of software subsystems.

6. An information processing system according to Claim 2 wherein said plurality of processing functions comprises a plurality of function sets including a base function set and at least one other function set for each one of said plurality of adapter cards, said function sets tailored to the functions provided by each adapter card.

7. An information processing system according to Claim 3 wherein said base function set manages logical resources on each of said plurality of adapter cards.

8. An information processing system according to Claim 3 further comprising an I/O address file comprising, adapter card identification, type of adapter card required by an application program, a directory pointer for a required adapter card, and, initialization information for each of said plurality of software subsystems.

7. An information processing system according to Claim 3 wherein said base function set further comprises an OPEN function for enabling said at least one application program to access at least one of said plurality of adapter cards.

FIG. 1

FIG. 2

| BASE ID | 51 |

| CONNECTION ID$_1$ |

| CONNECTION ID$_N$ |

11

52

55

| VECTOR TO FUNC-TION SET N |

| VECTOR TO FUNC-TION SET M |

56

FUNCTION SET M 53

| VECTOR | 57 |

FUNCTION A IN FUNCTION SET M 59

FUNCTION SET N 54

| 58 |

60 FUNCTION B IN FUNCTION SET N

FIG. 3

FIG. 4

FIG. 5

FIND ADDRESS
OF FUNCTION
SET VECTOR — 91

USE FUNCTION
ID AS INDEX
INTO VECTOR — 92

LOAD ENTRY
POINT
ADDRESS — 93

ENTRY POINT
PARAMETERS — 94

RETURN — 95

## FIG. 6

HOST
PROCESSOR — 189

18

INSTRUCTION
MEMORY

121

SIGNAL
PROCESSOR

188

DATA MEMORY

187

## FIG. 7

APPLICATION  13

DRIVER  14

11

20

IMPLEMENTATION CODE  28

HDW INTERRUPT ROUTER  29

COMMAND  INTERRUPT

121

12

18

SP CONTROL

124

114

112

113

FIG. 8